# EUROPÄISCHE PATENTANMELDUNG

(11) **EP 0 971 050 A2**
(43) Veröffentlichungstag der Anmeldung: **12.01.2000**
(21) Anmeldenummer: 99890223.3
(22) Anmeldetag: 05.07.1999
(51) Int. Cl.: C23G 1/36, C22B 3/00

(54) **Verfahren zum Abstumpfen von Metallchlorid enthaltenden Lösungen sowie zur Herstellung von Metalloxiden**

(30) Priorität: 08.07.1998 AT 118798
(71) Anmelder: Eurox Eisenoxydproduktions- und Vertriebsgesellschaft m.b.H., 1060 Wien (AT)
(72) Erfinder:
(74) Vertreter: Köhler-Pavlik, Johann, Dipl.-Ing.

(57) **Zusammenfassung**

Die Erfindung betrifft ein Verfahren zum Abstumpfen von wässrigen, sauren, vorzugsweise salzsauren, Metallchlorid enthaltenden Lösungen, wobei die Lösung in zumindest einer Stufe mit Metall, insbesondere mit Metallschrott abgestumpft wird. Das Verfahren ist dadurch gekennzeichnet, daß als Metall in zumindest einer der Stufen des Abstumpfens zumindest teilweise Aluminium und/oder eine aluminiumhältige Legierung eingesetzt wird.

## Beschreibung

Die Erfindung betrifft ein Verfahren zum Abstumpfen von Metallchlorid enthaltenden Lösungen gemäß dem Oberbegriff des Patentanspruches 1. Die Erfindung betrifft weiters ein Verfahren zur Herstellung von Metalloxiden aus einer ein oder mehrere Metallchloride enthaltenden Lösung.

Solche Lösungen fallen z.B. beim salzsauren Beizen von Stahl an. Zur Nutzung dieses Nebenproduktes wurden in der Vergangenheit mehrere Wege vorgeschlagen, einerseits aus dieser Lösung Fe₂O₃ zu gewinnen sowie andererseits Salzsäure (HCl) für das Beizverfahren zurückzugewinnen.

Die Gewinnung von Fe₂O₃ aus salzsauren, FeCl₂ enthaltenden Lösungen erfolgt weitverbreitet durch pyrohydrolytische Verfahren. Bei diesen Verfahren wird das in der Lösung befindliche FeCl₂ mit gasförmigem Wasser zu Fe₂O₃ und HCl umgesetzt. Eine bevorzugte Art, dieses Verfahren durchzuführen, ist das Sprühröstverfahren, wobei im Sprühröstreaktor das Metalloxid als Bodenprodukt ausgetragen wird und die entstandene gasförmige Salzsäure in Absorptionskolonnen absorbiert und wieder dem Beizverfahren zugeführt wird.

Wenn in der Lösung auch Kieselsäure enthalten ist, ist es dabei notwendig, bereits vor dem pyrohydrolytischen Verfahren einen Großteil der Kieselsäure von der Lösung abzutrennen.

Vor der Abtrennung der Kieselsäure wird die Lösung zumeist von überschüssiger Salzsäure befreit, z.B. durch Abstumpfen der Lösung mit Schrott. Die Ausfällung des Fe(OH)₃ erfolgt durch eine Oxidation des im wesentlichen in zweiwertiger Form vorliegenden Eisens und anschließender Zugabe einer alkalischen Substanz, z.B. Ammoniumhydroxid.

Verfahren zur Herstellung von Metalloxiden aus solchen Lösungen, insbesondere aus verbrauchten Beizlösungen, sind z.B. in der AT-B 380.675 oder in der AT-A 700/95 beschrieben.

In diesen Dokumenten wird das notwendige Abstumpfen der Lösung mit Metallschrott, insbesondere mit Eisen durchgeführt.

Ein Problem der bekannten Verfahren zur Regeneration von Metallchloriden enthaltenden salzsauren Lösungen ist die Anwesenheit von Blei, Kupfer oder anderen Metallen in der zu behandelnden Lösung. Diese Metalle verbleiben nämlich während der Verfahrensschritte in der Lösung und können die herzustellenden Metalloxide, insbesondere Eisenoxid, verunreinigen.

Insbesondere Blei kann in der Form von Bleichlorid bei einer pyrohydrolytischen Behandlung der verbrauchten Beizlösung kaum abgetrennt werden. Das Bleichlorid destilliert bei der pyrohydrolytischen Behandlung ab und verbleibt somit im Kreislauf der Beizsäure. Die Folge davon ist eine stete Anreicherung der Lösung mit Blei.

Die vorliegenden Erfindung stellt sich die Aufgabe, die bekannten Probleme der Behandlung bzw. Regeneration von Metallchloriden enthaltenden Lösungen, insbesondere Beizlösungen auf effiziente Art zu beseitigen.

Diese Aufgabe wird durch ein Verfahren zum Abstumpfen der Lösung gelöst, welches dadurch gekennzeichnet ist, daß als Metall in zumindest einer der Stufen des Abstumpfens zumindest teilweise Aluminium und/oder eine aluminiumhältige Legierung eingesetzt wird.

Es wird also erfindungsgemäß vorgesehen, daß im Falle einer einzigen Abstumpfstufe der z.B. zum Abstumpfen verwendete Löseturm zumindest teilweise mit Aluminium und/oder der aluminiumhältigen Legierung befüllt wird. Im Falle mehrerer Stufen zum Abstumpfen soll zumindest einer der z.B verwendeten Lösetürme mit Aluminium und/oder der aluminiumhältigen Legierung ganz oder teilweise befüllt sein.

Die Erfindung nützt die an sich bekannte Tatsache, daß aufgrund der elektrochemischen Spannungsreihe das Aluminium in der Lösung befindliche edlere Metalle, darunter insbesondere Blei, aber auch Nickel, Kobalt, Quecksilber oder Kupfer ausfällen kann. Es kommt somit zu einer Zementation dieser edleren Metalle, wodurch sie leicht aus der Lösung entfernt werden können.

Aluminium kann im Rahmen der Erfindung als Reinmetall (z.B. Aluminiumschrott) oder in einer aluminiumhältigen Legierung, insbesondere in einer Legierung mit Magnesium eingesetzt werden.

Eine Verwendung von Aluminium für das Abstumpfen von Metallchloride enthaltende Lösungen, insbesondere Beizlösungen ist bislang nicht bekannt geworden.

Eine bevorzugte Ausführungsform des erfindungsgemäßen Verfahrens besteht darin, daß die Lösung in zwei Stufen abgestumpft wird. Bei dieser Verfahrensweise ist es besonders bevorzugt, wenn das Aluminium bzw. die aluminiumhältige Legierung in der zweiten Stufe eingesetzt wird.

Bevorzugt wird die Lösung in der ersten Stufe auf einen pH-Wert von 0 bis 1 und in der nachfolgenden Stufe auf einen pH-Wert von 1 bis 2 abgestumpft.

Auch wenn die Lösung in mehr als zwei Stufen abgestumpft wird, ist es vorteilhaft, wenn das Aluminium bzw. die aluminiumhältige Legierung in der letzten Stufe eingesetzt wird. Es ist aber natürlich auch durchaus möglich, in mehreren Stufen Aluminium bzw. die aluminiumhältige Legierung einzusetzen.

Bevorzugt überwiegt in jener Stufe, in welcher Aluminium und/oder eine aluminiumhältige Legierung als Metall eingesetzt wird, das Aluminium die anderen eingesetzten Metalle. Besonders bevorzugt wird in dieser Stufe nur Aluminium und/oder die aluminiumhältige Legierung als Metall zum Abstumpfen eingesetzt.

Die einzelnen Stufen des Abstumpfens können, wie an sich bekannt, in einem Löseturm erfolgen. Bei einem Abstumpfen in mehreren Stufen können mehrere, voneinander getrennte Lösetürme eingesetzt werden. Diese Lösetürme sind mit dem zum Abstumpfen eingesetzten Metall befüllt, wobei erfindungsgemäß zumindest einer der Lösetürme zumindest teilweise mit Aluminium bzw. einer aluminiumhältigen Legierung befüllt ist.

Die Erfindung eignet sich besonders zum Abstumpfen von Eisenchlorid enthaltenden Lösungen, insbesondere verbrauchten Beizlösungen.

Die Erfindung betrifft auch ein Verfahren zur Herstellung von Metalloxiden, insbesondere von Eisen(III)oxid oder Mischoxiden von insbesondere Eisen, Mangan, Kobalt, Nickel und Aluminium aus Verbindungen dieser Metalle enthaltenden salzsauren Ausgangs-Lösungen durch Abstumpfen der Lösung, gegebenenfalls Abtrennung von Kieselsäure aus der Lösung und pyrohydrolytischer Behandlung der Lösung, welches dadurch gekennzeichnet ist, daß das Abstumpfen der Lösung unter zumindest teilweiser Verwendung von Aluminium und/oder einer aluminiumhältigen Legierung als eingesetztes Metall gemäß dem oben beschriebenen Verfahren durchgeführt wird.

Mit diesem Verfahren wird auf einfache Weise das Problem der Anreicherung von insbesondere Blei in der Beizlösung gelöst.

Eine konkrete Ausführungsform des erfindungsgemäßen Verfahrens besteht darin, daß die Salzsäure enthaltende Lösung (z.B. eine Beizlösung oder sonstige saure Metallchloridlösungen) durch einen Löseturm geführt wird, welcher mit Eisenschrott gefüllt ist und die freie Salzsäure bis auf einen pH-Wert von ca. 1 unter Bildung von Eisenchlorid neutralisiert. Diese Lösung geht nun in einen zweiten Löseturm, der mit metallischem Aluminium (Schrott) oder mit einer aluminiumhältigen Legierung, z.B. einer Legierung mit Magnesium gefüllt ist. Außer der vollständigen Abstumpfung der noch vorhandenen freien Säure bis auf einen pH-Wert von ca. 2 werden dabei durch Zementation etwaige vorhandene Chloride von Blei, Nickel, Kobalt, Quecksilber und Kupfer aus der Lösung abgetrennt. Das bei diesem Prozeß in Lösung gehende Aluminiumchlorid kann vor einer weiteren Behandlung der Lösung durch eine Erhöhung des pH-Wertes und Ausfällen des entstandenen Aluminiumhydroxides aus der Lösung entfernt werden.

Die erfindungsgemäß abgestumpfte Lösung kann nunmehr in an sich bekannter Weise weiterbehandelt werden, z.B. zur Herstellung von Eisen(III)oxid einer pyrohydrolytischen Behandlung unterzogen werden.

## Patentansprüche

1. Verfahren zum Abstumpfen von wässrigen, sauren, vorzugsweise salzsauren, Metallchlorid enthaltenden Lösungen, wobei die Lösung in zumindest einer Stufe mit Metall, insbesondere mit Metallschrott abgestumpft wird, dadurch gekennzeichnet, daß als Metall in zumindest einer der Stufen des Abstumpfens zumindest teilweise Aluminium und/oder eine aluminiumhältige Legierung eingesetzt wird.

2. Verfahren gemäß Anspruch 1, dadurch gekennzeichnet, daß die Lösung in zwei Stufen abgestumpft wird.

3. Verfahren gemäß Anspruch 2, dadurch gekennzeichnet, daß Aluminium in der zweiten Stufe als Metall eingesetzt wird.

4. Verfahren gemäß Anspruch 3, dadurch gekennzeichnet, daß die Lösung in der ersten Stufe auf einen pH-Wert von 0 bis 1 und in der nachfolgenden Stufe auf einen pH-Wert von 1 bis 2 abgestumpft wird.

5. Verfahren gemäß einem der vorhergehenden Ansprüche, dadurch gekennzeichnet, daß in der Stufe, in welcher Aluminium als Metall eingesetzt wird, das Aluminium und/oder die aluminiumhältige Legierung die anderen eingesetzten Metalle überwiegt oder bevorzugt nur Aluminium und/oder die aluminiumhältige Legierung eingesetzt wird.

6. Verfahren gemäß einem der vorhergehenden Ansprüche, dadurch gekennzeichnet, daß die einzelnen Stufen des Abstumpfens in einem Löseturm erfolgen.

7. Verfahren gemäß Anspruch 6, dadurch gekennzeichnet, daß bei mehreren Stufen mehrere, voneinander getrennte Lösetürme eingesetzt werden.

8. Verfahren gemäß einem der vorhergehenden Ansprüche, dadurch gekennzeichnet, daß die Lösung Eisenchlorid enthält.

9. Verfahren gemäß einem der vorhergehenden Ansprüche, dadurch gekennzeichnet, daß die Lösung eine verbrauchte Beizlösung ist.

10. Verfahren zur Herstellung von Metalloxiden, insbesondere von Eisen(III)oxid oder Mischoxiden von insbesondere Eisen, Mangan, Kobalt, Nickel und Aluminium aus Verbindungen dieser Metalle enthaltenden salzsauren Ausgangs-Lösungen durch Abstumpfen der Lösung, gegebenenfalls Abtrennung von Kieselsäure aus der Lösung und pyrohydrolytischer Behandlung der Lösung, dadurch gekennzeichnet, daß das Abstumpfen der Lösung mittels eines Verfahrens gemäß einem der Ansprüche 1 bis 9 durchgeführt wird.
